(19) Europäisches Patentamt / European Patent Office / Office européen des brevets

(11) **EP 3 002 561 B1**

(12) **FASCICULE DE BREVET EUROPEEN**

(45) Date de publication et mention
de la délivrance du brevet:
**13.12.2017 Bulletin 2017/50**

(51) Int Cl.:
**G01D 5/14** *(2006.01)* **G01D 5/20** *(2006.01)*
**G01D 18/00** *(2006.01)*

(21) Numéro de dépôt: **15185365.2**

(22) Date de dépôt: **15.09.2015**

(54) **PROCÉDÉ D'AUTO-CALIBRATION D'UN DISPOSITIF DE COMPTAGE DE TOURS D'UNE ROUE**

SELBSTKALIBRIERUNGSVERFAHREN EINER VORRICHTUNG ZUR DREHZAHLMESSUNG EINES RADS

METHOD FOR AUTO-CALIBRATION OF A DEVICE FOR COUNTING ROTATIONS OF A WHEEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.10.2014 FR 1459521**

(43) Date de publication de la demande:
**06.04.2016 Bulletin 2016/14**

(73) Titulaire: **SAGEMCOM ENERGY & TELECOM SAS**
**92500 Rueil-Malmaison (FR)**

(72) Inventeur: **TEBOULLE, Henri**
**92500 RUEIL MALMAISON (FR)**

(74) Mandataire: **Lavialle, Bruno François Stéphane et al**
**Cabinet Boettcher**
**16, rue Médéric**
**75017 Paris (FR)**

(56) Documents cités:
**EP-A1- 0 720 021 EP-A1- 2 381 223**
**DE-A1- 3 733 944 DE-A1-102008 061 924**
**US-A1- 2004 036 463 US-A1- 2005 140 364**

EP 3 002 561 B1

## Description

La présente invention concerne le comptage de tours d'un élément tournant, par exemple dans le domaine des compteurs mécaniques tels que ceux utilisés pour la distribution de gaz, d'eau ou d'électricité. Il est connu un compteur de gaz comprenant un élément tournant autour d'un axe par rapport à un bâti de telle manière que la vitesse de rotation de l'élément tournant soit représentative de la quantité de gaz distribué. Le compteur comporte un dispositif de comptage du nombre de tours de l'élément tournant, comprenant un aimant excentré fixé à l'élément tournant et un relais magnétique, de type ampoule REED, sous tension monté fixe par rapport au bâti et relié à un circuit de comptage pour détecter le passage de l'aimant et ainsi compter le nombre de tours. Il est connu également un dispositif de comptage dans lequel l'aimant est remplacé par une pièce métallique et le relais magnétique par une bobine d'un circuit résonant.

La conception d'un tel dispositif de comptage doit être conforme à des exigences très strictes, notamment en matière de consommation électrique et de précision.

La consommation électrique d'un compteur équipé du dispositif de comptage doit être aussi réduite que possible. En effet, le compteur peut être positionné à l'extérieur d'une habitation ou être éloigné de toute prise secteur, et est par conséquent alimenté par une batterie qui doit lui permettre de fonctionner avec une autonomie importante, comprise classiquement entre dix et vingt ans.

On requiert aussi que le comptage soit effectué avec une précision importante. La dérive acceptable spécifiée pour certains compteurs modernes est ainsi typiquement inférieure ou égale à un tour tous les dix mille tours. Or, l'élément tournant du compteur est soumis à de multiples contraintes qui tendent à perturber le comptage : dérives mécaniques dues par exemple à des vibrations, phénomènes d'usure provoquant un voilage de l'élément tournant, vieillissement des composants variations de température, etc.

Un but de l'invention est de réduire la consommation électrique d'un dispositif de comptage et d'améliorer sa précision.

A cet effet, on prévoit, selon l'invention, un procédé d'auto-calibration d'un dispositif de comptage de tours d'une roue qui tourne autour d'un axe par rapport à un bâti et qui est pourvue localement d'au moins une cible excentrée ayant une trajectoire en regard d'une portion de laquelle sont montés fixes sur le bâti un premier dispositif de détection et un deuxième dispositif de détection pour fournir successivement un signal de détection représentatif de la présence ou de l'absence de ladite cible, une unité de comptage étant reliée au premier dispositif de détection et au deuxième dispositif de détection et étant adaptée, pour chacun des dispositifs de détection, à produire un signal déterminé de présence de la cible lorsque le signal de détection du dispositif de détection est compris dans un premier intervalle dans lequel le signal de détection est fort, à produire un signal déterminé d'absence de la cible lorsque le signal de détection du dispositif de détection est compris dans un deuxième intervalle de détection dans lequel le signal de détection est faible, à produire un signal indéterminé lorsque le signal de détection du dispositif de détection est compris dans un troisième intervalle de détection, l'unité de comptage étant en outre adaptée à incrémenter d'un un nombre de tours mémorisé après avoir successivement produit un signal déterminé de présence pour le premier dispositif de détection et le deuxième dispositif de détection.

Le procédé comporte, pour chaque dispositif de détection, une étape d'auto-calibration au cours de laquelle, lorsque l'unité de comptage produit un signal indéterminé, on modifie la largeur du premier intervalle de détection et/ou du deuxième intervalle de détection de ce dispositif de détection en fonction du dernier signal déterminé pour ce dispositif de détection, du signal de détection de l'autre dispositif de détection et du dernier signal déterminé pour l'autre dispositif de détection.

L'étape d'auto-calibration du procédé d'auto-calibration de l'invention est ainsi intégrée au comptage du nombre de tours de la roue et ne nécessite ni la mise en oeuvre d'opérations consommatrices d'énergie électrique dédiées à l'auto-calibration (mesures électriques dédiées, sur-échantillonnage, etc.), ni l'utilisation de composants particuliers dont la consommation s'ajouterait à celle du dispositif de comptage de tours.

Le procédé d'auto-calibration de l'invention permet de calibrer dynamiquement le dispositif de comptage et de maintenir une dérive inférieure au seuil acceptable.

D'autres caractéristiques et avantages de l'invention ressortiront à la lecture de la description qui suit de modes de réalisation particuliers non limitatifs de l'invention.

Il sera fait référence aux dessins annexés, parmi lesquels :

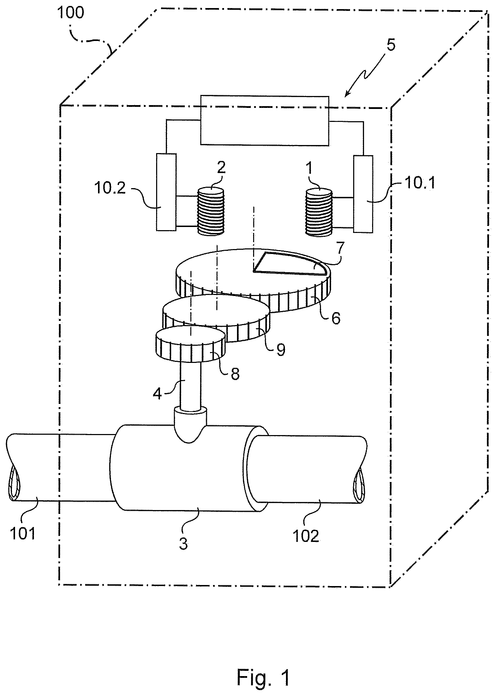

-     la figure 1 est une vue schématique en perspective d'un compteur comprenant un premier dispositif de comptage dans lequel est mis en oeuvre le procédé d'auto-calibration de l'invention ;

-     la figure 2 est une vue schématique du premier dispositif de comptage pour une position de l'élément tournant, avec l'allure du signal oscillant produit par chaque circuit inductif ;

-     les figures 3 à 5 sont des vues analogues à la figure 2 montrant le premier dispositif de comptage, pour d'autres positions de l'élément tournant ;

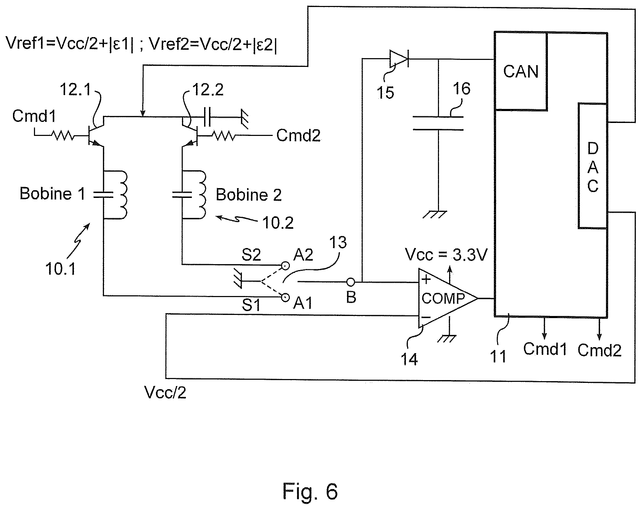

-     la figure 6 est un schéma du circuit du dispositif de comptage ;

-     la figure 7 est un graphique illustrant le fonctionnement du premier dispositif de comptage ;

-     les figures 8a, 8b, 8c montrent l'allure du signal oscillant en l'absence de la masse métallique, en pré-

2

sence de celle-ci, et en présence d'une fraude ;
- la figure 9 est un tableau illustrant le fonctionnement du procédé d'auto-calibration de l'invention ;

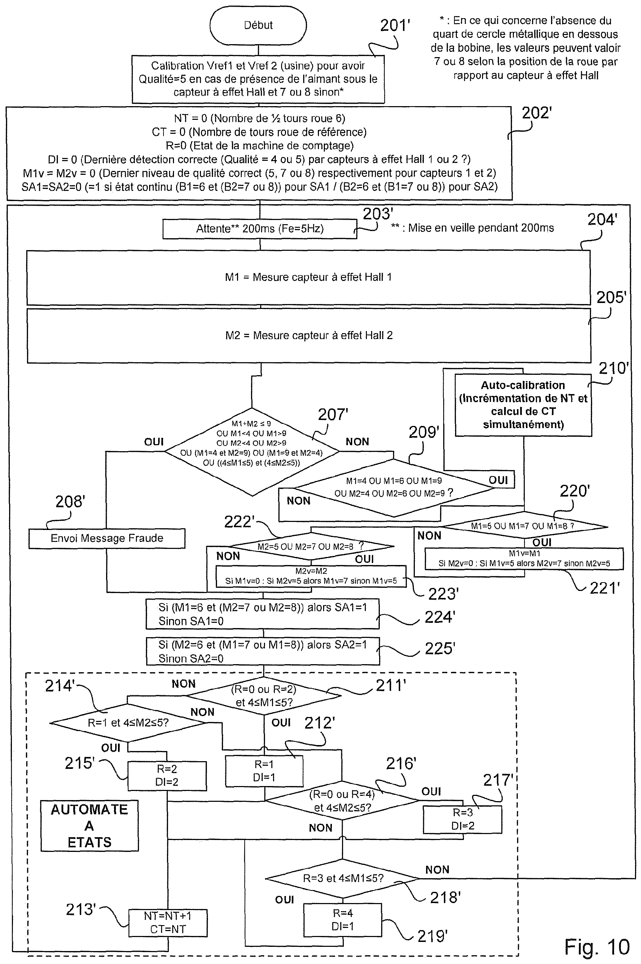

- la figure 10 est un graphique illustrant le fonctionnement d'un deuxième dispositif de comptage dans lequel le procédé d'auto-calibration de l'application est mis en oeuvre.

L'invention est ici décrite en application à un compteur de gaz destiné à être installé dans un bâtiment privé pour raccorder une installation de distribution du gaz dans le bâtiment à un réseau externe de distribution du gaz. Il va de soi que l'invention n'est pas limitée à cette application et concerne aussi, notamment, les compteurs d'eau, d'électricité...

En référence aux figures, le compteur comprend un bâti formant boîtier 100 dans lequel arrive un conduit 101 d'amenée de gaz, relié au réseau externe de distribution, et dont part un conduit 102 de l'installation de distribution de gaz. Les deux conduits sont reliés l'un à l'autre par un raccord 3 dans lequel s'étend une partie d'un élément tournant 4 entrainée en rotation par le gaz circulant dans le raccord depuis le conduit 101 vers le conduit 102 de telle manière que la rotation de l'élément tournant 4 soit représentative de la quantité de gaz passant dans le raccord 3. Cet agencement est connu en lui-même et ne sera pas plus décrit ici.

Le compteur comprend un premier dispositif de comptage des tours de l'élément tournant 4, généralement désigné en 5. Le premier dispositif de comptage 5 comprend une roue 6 en matériau non métallique liée en rotation à l'élément tournant 4 et pourvue localement d'au moins une masse métallique excentrée 7. La masse métallique 7 occupe ici un quartier de la roue 6. La roue 6 est pourvue d'une denture périphérique et un premier pignon denté 8 est solidaire de l'élément tournant 4 pour transmettre le mouvement de l'élément tournant 4 vers la roue 6 via un deuxième pignon denté 9 engrenant avec la roue 6 et le premier pignon 8. Les pignons 8, 9 et la roue 6 ont des diamètres tels que la roue 6 ait une fréquence de rotation inférieure à une fréquence de rotation du premier pignon 8. La roue 6 tourne ici deux fois moins vite que le premier pignon 8.

Le premier dispositif de comptage 5 comprend également un premier dispositif de détection comprenant un premier circuit inductif résonant 10.1 et un deuxième dispositif de détection comprenant un deuxième circuit inductif résonant 10.2, chaque circuit inductif résonant 10.1, 10.2 étant relié à une unité de comptage comportant ici un microcontrôleur 11.

Chaque circuit inductif 10.1, 10.2 comprend une bobine 1, 2 montée fixe par rapport au boîtier 100 en regard chacune d'une portion de trajectoire de la masse métallique 7. Les bobines 1, 2 sont écartées l'une de l'autre de manière que chaque bobine 1, 2 soit sensible successivement à la masse métallique 7, c'est-à-dire que lorsqu'une des bobines 1, 2 est soumise à l'influence de la masse métallique 7, l'autre des bobines 1, 2 ne l'est pas.

Chaque bobine 1, 2 a une extrémité haute reliée au convertisseur numérique analogique DAC du microcontrôleur 11 par des commutateurs 12.1, 12.2 et une extrémité basse reliée à une borne A1, A2 d'un commutateur 13 ayant une troisième borne reliée à la masse et une quatrième borne B reliée à l'entrée positive d'un comparateur 14. Le comparateur 14 a une entrée négative reliée au convertisseur numérique analogique du microcontrôleur 11 et une sortie reliée à une entrée du microcontrôleur 11, intégrant un mécanisme permettant de compter les fronts montants (on pourrait également compter les fronts descendants au lieu des fronts montants) en sortie du comparateur dont la forme d'onde est un signal impulsionnel rectangulaire par exemple à 3, 3V.

La borne B du commutateur 13 est reliée via une diode 15 à un convertisseur analogique numérique CAN du microcontrôleur 11. Un condensateur 16 est monté entre la cathode de la diode 15 et la masse pour former un détecteur d'enveloppe du signal arrivant par la borne B du commutateur 13.

Le microcontrôleur 11 pilote les transistors 12.1, 12.2 entre leurs états passant et bloquant au moyen de signaux de commande Cmd1, Cmd2.

L'unité de comptage est agencée pour réaliser une opération de comptage en mettant en oeuvre les étapes suivantes :

- émettre périodiquement et quasi simultanément dans chaque circuit inductif 10.1, 10.2 une impulsion de tension Vref1, Vref2 selon une fréquence d'émission supérieure à une fréquence maximale prédéterminée de rotation de la roue 6, et égale à au moins 4 fois ladite fréquence maximale de manière à pouvoir compter les tours de la roue 6 sans erreur à l'aide desdits circuits inductifs,
- détecter un signal oscillant de tension S1, S2 en sortie du circuit inductif 10.1, 10.2 et le comparer à une tension de référence Vcc/2,
- incrémenter d'un un nombre de tours CT mémorisé après que les circuits inductifs 10.1, 10.2 ont livré successivement un signal oscillant ayant un nombre M1, M2 d'oscillations supérieures à la tension de référence inférieur au seuil prédéterminé.

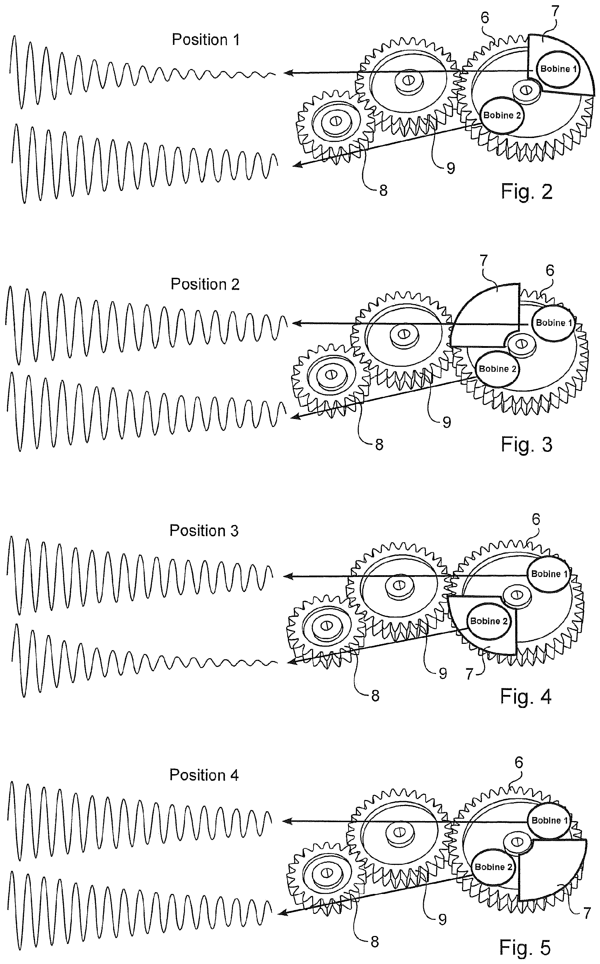

On comprend que le circuit inductif 10.1, 10.2 amortit l'impulsion de tension et fournit un signal oscillant. Selon que la masse métallique 7 est présente ou non sous la bobine, l'amortissement procuré par le circuit inductif 10.1, 10.2 est modifié (voir les figures 2 à 5).

La tension respective des impulsions Vref1 et Vref2 est ajustée au préalable (en usine par exemple), est légèrement supérieure à la tension de référence Vcc/2 et est ici égale respectivement à $Vcc/2+|\varepsilon 1|$ et $Vcc/2+|\varepsilon 2|$. La valeur de cette tension permet de régler le nombre M1, M2 du signal oscillant en présence et en l'absence de la masse métallique 7.

Le fonctionnement du premier dispositif de comptage va maintenant être décrit plus en détail.

Il est préférable de réaliser une étape de calibration (201) en usine. Pour chaque circuit inductif 10.1, 10.2, la tension Vref1, Vref2 est calibrée de telle manière que :

- lorsque le premier dispositif de détection, respectivement le deuxième dispositif de détection, détecte une présence de la masse métallique 7, le nombre M1, respectivement M2, d'oscillations supérieures à la tension de référence soit égal à 5 ;
- lorsque le premier dispositif de détection, respectivement le deuxième dispositif de détection, détecte une absence de la masse métallique 7, le nombre M1, respectivement M2, d'oscillations supérieures à la tension de référence soit égal à 7 ou 8.

Ceci revient à définir un seuil égal à 6, la différence de 2 entre les deux valeurs de nombre permettant de nettement discriminer l'absence et la présence de la masse métallique.

Il est ensuite procédé à une initialisation (étape 202) des variables de fonctionnement du premier dispositif de comptage :

- NT est le nombre de demi-tours de la roue 6 (soit, en théorie, le nombre de tours de l'élément tournant 4) ;
- CT est le nombre de tour de l'élément tournant 4 ;
- R est une variable d'état de l'unité de comptage ;
- DI indique quelle est la dernière bobine qui a détecté 4 ou 5 impulsions (valeur 1 si bobine 1 et valeur 2 si bobine 2) ;
- M1v et M2v indiquent la dernière valeur correcte (5, 7 ou 8) mesurée pour chaque bobine ;
- SA1(respectivement SA2) est un sémaphore égal à 1 tant que l'on est dans l'état où l'on mesure 6 pour la bobine 1 et 7 ou 8 pour la bobine 2 (respectivement 6 pour la bobine 2 et 7 ou 8 pour la bobine 1 pour SA2), et égal à 0 sinon ;
- U1n et U2n représentent le niveau de tension de l'enveloppe ;
- E1 et E2 représentent la valeur moyenne des enveloppes des signaux oscillants S1, S2 (moyenne des N derniers U1n, U2n).

Une fois le compteur installé, et en mode de fonctionnement normal, le premier dispositif de comptage est mis en veille pendant 200 ms (étape 203) pour économiser l'énergie. Ceci correspond à une fréquence d'échantillonnage de 5 Hz, sachant que dans le mode de réalisation décrit, la fréquence de rotation maximale de la roue 6 est de 0,5 Hz. On pourrait également travailler à une fréquence d'échantillonnage différente, par exemple de 7 Hz, ce qui correspondrait alors à une période d'échantillonnage de 143 ms au lieu de 200 ms.

Les transistors 12.1, 12.2 sont alors à l'état bloquant et le commutateur 13 maintient les deux bobines 1, 2 à la masse.

A l'instant t=tn, la bobine 1 est excitée par l'injection de l'impulsion de tension. A cette fin, le transistor 12.1 est amené dans son état passant et, après 2μs (la capacité de la bobine 1 est alors chargée), le commutateur 13 est commandé pour relier la bobine 1 à l'entrée positive du comparateur 14 et lui fournir le signal S1. A t=tn+t0, le nombre M1 est déterminé et, à t=tn+t1, le niveau de tension U1n est déterminé (étape 204).

Lorsque la bobine 1 est excitée, la bobine 2 est découplée autant que possible du reste du premier dispositif de comptage. L'extrémité basse de la bobine 2 est mise à la masse à cet effet via le commutateur 13, et l'extrémité haute de la bobine 2 est portée à haute impédance via le commutateur 12.2.

A l'instant t=tn+50μs, la bobine 2 est excitée par l'injection de l'impulsion de tension. A cette fin, le transistor 12.2 est amené dans son état passant et, après 2μs (la capacité de la bobine 2 est alors chargée), le commutateur 13 est commandé pour relier la bobine 2 à l'entrée positive du comparateur 14 et lui fournir le signal S2. A t=tn+50μs+t0, le nombre M2 est déterminé et, à t=tn+50μs+t1, le niveau de tension U2n est déterminé (étape 205). Typiquement, t0=10μs et t1=20μs.

Lorsque la bobine 2 est excitée, la bobine 1 est découplée autant que possible du reste du premier dispositif de comptage. L'extrémité basse de la bobine 1 est mise à la masse à cet effet via le commutateur 13, et l'extrémité haute de la bobine 1 est portée à haute impédance via le commutateur 12.1.

Les valeurs moyennes des enveloppes E1, E2 sont ensuite calculées (étape 206).

On cherche ensuite à déterminer la véracité d'au moins l'une des conditions suivantes :

- $M1+M2 \leq 9$ ;
- $M1 < 4$ ;
- $M1 > 9$ ;
- $M2 < 4$ ;
- $M2 > 9$ ;
- $M1=4$ et $M2=9$ ;
- $M1=9$ et $M2=4$ ;
- $4 \leq M1 \leq 5$ et $4 \leq M2 \leq 5$ ;
- E1 est inférieure à un seuil prédéterminé E_seuil ;
- E2 est inférieure à un seuil prédéterminé E_seuil.

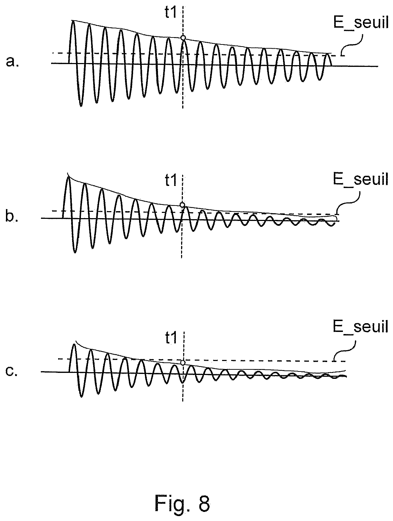

Si l'une de ces conditions est vraie, une alerte à la fraude est émise (étape 208). En particulier, concernant les deux dernières conditions, on peut voir, par comparaison des figure 8a, 8b, 8c, que :

- la valeur moyenne de l'enveloppe du signal en l'absence de la masse métallique 7 et en l'absence d'une masse métallique externe (figure 8a) est supérieure à la valeur moyenne de l'enveloppe du signal en présence de la masse métallique 7 et en l'absence d'une masse métallique externe (figure 8b) ;
- la valeur moyenne de l'enveloppe du signal en présence de la masse métallique 7 et en l'absence d'une masse métallique externe (figure 8b) est supérieure à la valeur moyenne de l'enveloppe du signal en présence d'une masse métallique externe (figure 8c).

Si aucune de ces conditions n'est vraie, on cherche à déterminer la véracité d'au moins l'une des conditions suivantes :

- M1=4 ;
- M1=6 ;
- M1=9 ;
- M2=4 ;
- M2=6 ;
- M2=9.

Ces conditions correspondent à une modification des propriétés d'amortissement des circuits inductifs 10.1, 10.2. Si l'une de ces conditions est vraie, il est nécessaire de mettre en oeuvre le procédé d'auto-calibration de l'invention (étape 210), qui sera décrit en détail ci-après. Si aucune de ces conditions n'est vraie, et également à la fin de de la mise en oeuvre du procédé d'auto-calibration, on cherche à déterminer la véracité de l'une des conditions suivantes (étape 220) :

- M1=5 ;
- M1=7 ;
- M1=8.

Si l'une de ces conditions est vraie, la valeur M1 est attribuée à M1v, et si M2v=0, alors si M1v=5 alors M2v=7 sinon M2v=5 (étape 221), et on passe à l'étape 222. Sinon, on passe à l'étape 222.
Puis, on cherche à déterminer la véracité de l'une des conditions suivantes (étape 222) :

- M2=5 ;
- M2=7 ;
- M2=8.

Si l'une de ces conditions est vraie, la valeur M2 est attribuée à M2v, et si M1v=0, alors si M2v=5 alors M1v=7 sinon M1v=5 (étape 223), et on passe à l'étape 224. Sinon, on passe à l'étape 224.
Ensuite, on cherche à déterminer la véracité des conditions suivantes (étape 224) :

- M1=6 ;
- M2=7 ou M2=8.

Si ces conditions sont vraies, la valeur 1 est attribuée à SA1. Sinon, la valeur 0 est attribuée à SA1.
Ensuite, on cherche à déterminer la véracité des conditions suivantes (étape 225) :

- M2=6 ;
- M1=7 ou M1=8.

Si ces conditions sont vraies, la valeur 1 est attribuée à SA2. Sinon, la valeur 0 est attribuée à SA2.
Ensuite, on cherche à déterminer la véracité des conditions suivantes (étape 211) :

- R=0 ou R=2 ;
- 

$$4 \leq M1 \leq 5.$$

Si ces conditions sont vraies, la valeur 1 est attribuée à R et à DI (étape 212) puis la variable NT prend la valeur NT+1 et la variable CT prend la valeur NT lors d'une étape d'incrémentation 213. On reprend ensuite le cycle à la mise en veille du premier dispositif de comptage (203).
Si au moins l'une de ces conditions n'est pas vraie, on cherche à déterminer la véracité des conditions suivantes (étape 214) :

- R=1 ;
- 

$$4 \leq M2 \leq 5.$$

Si ces conditions sont vraies, la valeur 2 est attribuée à R et à DI (étape 215) puis la variable NT prend la valeur NT+1 et la variable CT prend la valeur NT lors de l'étape d'incrémentation 213. On reprend ensuite le cycle à la mise en veille du premier dispositif de comptage (203).
Si au moins l'une de ces conditions n'est pas vraie, on cherche à déterminer la véracité des conditions suivantes (étape 216) :

- R=0 ou R=4 ;
- 

$$4 \leq M2 \leq 5.$$

Si ces conditions sont vraies, la valeur 3 est attribuée à R et la valeur 2 est attribuée à DI (étape 217) puis la variable NT prend la valeur NT+1 et la variable CT prend la valeur NT lors de l'étape d'incrémentation 213. On reprend ensuite le cycle à la mise en veille du premier dispositif de comptage (203).
Si au moins l'une de ces conditions n'est pas vraie, on cherche à déterminer la véracité des conditions suivantes (étape 218) :

- R=3 ;
- 

$$4 \leq M1 \leq 5.$$

Si ces conditions sont vraies, la valeur 4 est attribuée à R et la valeur 1 est attribuée à DI (étape 219) puis la variable NT prend la valeur NT+1 et la variable CT prend la valeur NT lors de l'étape d'incrémentation 213. On reprend ensuite le cycle à la mise en veille du dispositif de comptage (203).
Si au moins l'une de ces conditions n'est pas vraie, on reprend le cycle à la mise en veille du dispositif de comptage (203).

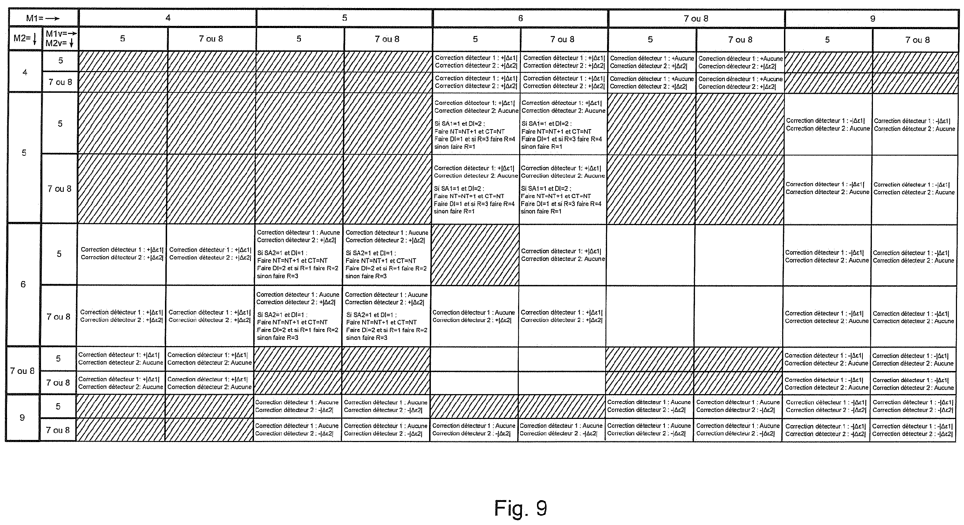

On décrit maintenant plus en détail le procédé d'auto-calibration de l'invention, en référence à la figure 9.

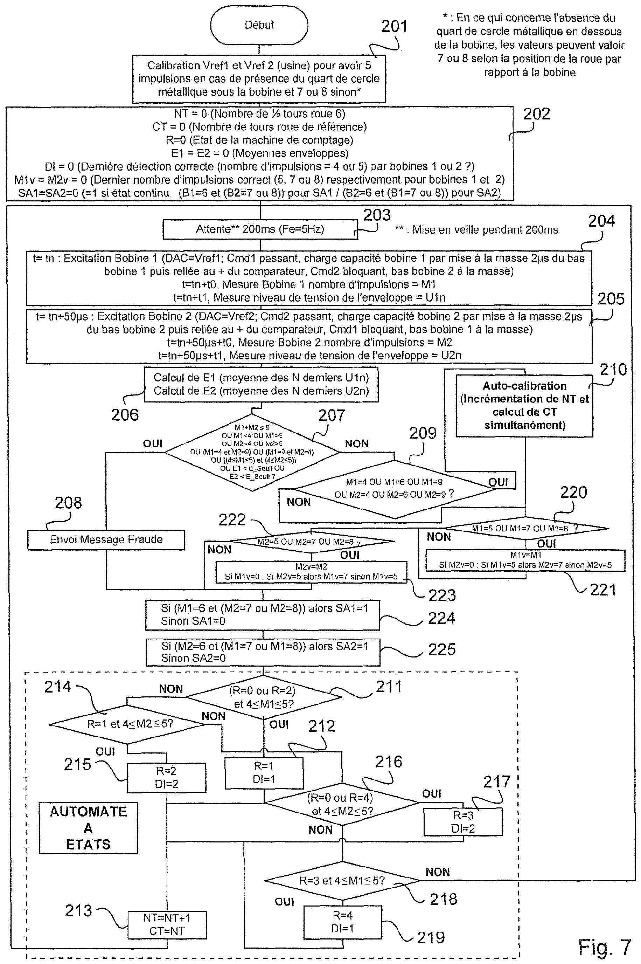

Pour chaque dispositif de détection, le procédé d'auto-calibration de l'invention (étape 210 de la figure 7) comporte une étape de calibration au cours de laquelle une décision est prise de modifier l'impulsion de tension Vref1 ou Vref 2 du circuit inductif 10.1 ou 10.2 dudit dispositif de détection lorsque M1=4 ou M1=6 ou M1=9, ou lorsque M2=4 ou M2=6 ou M2=9, c'est-à-dire lorsque les conditions de la mise en oeuvre du procédé d'auto-calibration (étape 210) présentées sur la figure 7 sont réunies.

On décrit le procédé d'auto-calibration de l'invention mis en oeuvre lorsque M1=4 ou M1=6 ou M1=9, en se plaçant successivement dans les cas où M1=4, puis M1=9, puis enfin M1=6 qui est le cas le plus complexe. Cette description peut facilement être adaptée aux cas symétriques où M2=4, M2=6 ou M2=9.

La décision de modifier l'impulsion de tension Vref1 est prise, au moment d'une détection donnée, en fonction de la valeur de M1 en cours, mais aussi en fonction de la valeur de M1v, de M2 et de M2v au même moment.

Ainsi, dans le cas où M1=4, M1v=5 ou 7 ou 8 et M2=6, on ajoute une part de tension |Δε1| à Vref1 et une part de tension |Δε2| à Vref2. En effet, dans ce cas, le fait que M1=4 montre que le premier dispositif de détection détecte la présence de la masse métallique 7, et donc que le deuxième dispositif de détection détecte l'absence de la masse métallique 7. La valeur correcte de M1 devrait donc être 5 et la valeur correcte de M2 devrait être 7 ou 8. Le dispositif de comptage doit donc s'auto-calibrer pour corriger cette dérive « vers le bas » et pour que dans un prochain cas semblable à celui-ci, le nombre d'oscillations soit correct et donc supérieur aux valeurs M1 et M2 obtenues. On modifie donc Vref1 et Vref2 pour augmenter le nombre d'impulsions dans un cas semblable. Pour cela, on augmente Vref1 et Vref2 et donc le niveau du signal oscillant de tension en sortie de chaque circuit inductif 10.1, 10.2. Comme la tension de référence Vcc/2 n'est pas modifiée, le nombre d'impulsions attendu dans un cas semblable pour M1 et à M2 augmente et passe respectivement à 5 et à 7 ou 8.

De même, dans le cas où M1=4 et M2=7 ou 8, on ajoute une part de tension |Δε1| à Vref1 et on ne modifie pas Vref2. En effet, dans ce cas, le fait que M1=4 montre que le premier dispositif de détection détecte la présence de la masse métallique 7 mais qu'il dérive vers le bas, alors que le fait que M2=7 ou 8 montre que le deuxième dispositif de détection détecte l'absence de la masse métallique 7, ce qui est cohérent avec la valeur M2=7 ou 8 et avec le fait que le premier dispositif de détection détecte la présence de la masse métallique 7.

En suivant un raisonnement semblable, dans les cas où M1=9, et M2=5 ou 7 ou 8, il convient de retrancher une part de tension |Δε1| à Vref1 car le premier dispositif de détection détecte l'absence de la masse métallique 7 et la valeur correcte de M1 devrait être 7 ou 8. Il convient de plus de ne pas modifier Vref2, car la valeur de M2 est correcte : lorsque M2=5, le deuxième dispositif de détection détecte la présence de la masse métallique 7, et lorsque M2=7 ou M2=8, le deuxième dispositif de détection détecte l'absence de la masse métallique 7.

De même, dans les cas où M1=9 et M2=9, il convient de retrancher une part de tension |Δε1| à Vref1 et une part de tension |Δε2| à Vref2 car le premier dispositif de détection et le deuxième dispositif de détection détectent l'absence de la masse métallique 7 et les valeurs correctes de M1 et de M2 devraient être 7 ou 8.

Dans le cas où M1=9 et où M2=6, il convient de retrancher une part de tension |Δε1| à Vref1 car la valeur correcte de M1 devrait être 7 ou 8. Par contre, aucune indication n'est disponible sur la valeur correcte que devrait avoir M2 pour effectuer une correction fiable : lorsque le premier dispositif de détection ne détecte pas la masse métallique 7, il est possible que le deuxième dispositif de détection détecte la masse métallique 7 ou bien ne la détecte pas. Aucune correction n'est donc effectuée pour Vref2.

Le cas M1=6 est le cas le plus complexe. En effet, lorsque M1=6, il convient de déterminer s'il s'agit d'une dérive « vers le haut », d'une dérive « vers le bas », ou bien d'un cas normal où la masse métallique 7 est positionnée de sorte que la bobine 1 du circuit inductif 10.1 du premier dispositif de détection se trouve au bord de la masse métallique 7.

Dans le cas où M1=6 et M2=4, on ajoute une part de tension |Δε1| à Vref1 et une part de tension |Δε2| à Vref2 car le premier dispositif de détection détecte l'absence de la masse métallique 7, le deuxième dispositif de détection détecte la présence de la masse métallique 7, et les valeurs correctes de M1 et de M2 devraient être respectivement 7 ou 8 et 5.

Lorsque M1=6 et M2=9, on sait que le deuxième dispositif de détection détecte l'absence de la masse métallique 7 et donc que la valeur de M2 devrait être 7 ou 8 : on retranche donc une part de tension |Δε2| à Vref2. Par contre, aucune indication n'est disponible sur la valeur correcte que devrait avoir M1 pour effectuer une correction fiable : lorsque le deuxième dispositif de détection ne détecte pas la masse métallique 7, il est possible que le premier dispositif de détection détecte la masse métallique 7 ou ne la détecte pas. Aucune correction n'est donc effectuée pour Vref1.

De même, lorsque M1=6 et M2=7 ou 8, aucune indication n'est disponible sur la valeur correcte que devrait avoir M1 et aucune correction n'est effectuée pour Vref1. Vref2 n'est pas corrigée car la valeur de M2 est correcte et correspond à la détection d'une absence de masse métallique 7. Les cases vides du tableau de la figure 9 correspondent bien ainsi à des cas où aucune correction n'est effectuée, car aucune indication n'est disponible pour effectuer une correction fiable.

Lorsque M1=6, M1v=5, M2=6 et M2v=7 ou 8, on ajoute une part de tension |Δε2| à Vref2 et on ne corrige pas Vref1.

Lorsque M1=6, M1v=7 ou 8, M2=6 et M2v=5, on ajoute une part de tension |Δε1| à Vref1 et on ne corrige pas Vref2.

Lorsque M1=6, M1v=7 ou 8, M2=6, M2v=7 ou 8, on ajoute une part de tension |Δε1| à Vref1 et une part de tension |Δε2| à Vref2.

Lorsque M1=6 et M2=5, le deuxième dispositif de détection détecte correctement et sans dérive la présence de la masse métallique 7, et on en déduit donc que le premier dispositif de détection devrait détecter l'absence de la masse métallique 7 et que la valeur correcte de M1 devrait être 7 ou 8. On ajoute une part de tension |Δε1| à Vref1 et on ne corrige pas Vref2.

Dans ce cas particulier se pose la question de savoir si le comptage d'un demi-tour de la roue 6 (ou, ici, d'un nombre de tour de l'élément tournant 4), n'a pas été manqué. En effet, si M1 était déjà égal à 6 la dernière fois que le premier dispositif de détection était censé détecter la présence de la masse métallique 7, le comptage d'un tour aura été omis.

On détecte cette situation à l'aide du sémaphore SA1 et à l'aide de la variable DI. Si le sémaphore SA1 est égal à 1 lorsque M1=6 et M2=5 et que DI=2, le procédé d'auto-calibration déduit de ces informations que le comptage d'un tour a été omis et incrémente à la fois CT et NT. On considère alors que le premier dispositif de détection a correctement détecté la présence de la masse métallique et la valeur de DI est portée à 1. Si R=3, la valeur de R est alors portée à 4. La valeur de R est sinon portée à 1. On note que les corrections négatives pourraient être différentes des corrections positives (on retrancherait alors respectivement |Δε'1| différent de |Δε1|,|Δε'2| différent de |Δε2|, au lieu de respectivement |Δε1|,|Δε2|).

On a ainsi décrit le procédé d'auto-calibration de l'invention dans une application de dispositif de comptage dans lequel la masse métallique 7 est une cible excentrée positionnée sur la roue 6, dans lequel le premier dispositif de détection et le deuxième dispositif de détection comportent chacun un circuit inductif 10.1, 10.2 comprenant une bobine 1, 2 qui fournit un signal de détection, en l'occurrence un signal oscillant. Pour chaque dispositif de détection, l'unité de comptage produit un signal déterminé de présence de la cible lorsque le signal de détection du dispositif de détection est compris dans un premier intervalle dans lequel le signal de détection est fort, en l'occurrence lorsque M1 ou M2 sont égaux à 5, produit un signal déterminé d'absence de la cible lorsque le signal de détection du dispositif de détection est compris dans un deuxième intervalle de détection dans lequel le signal de détection est faible, en l'occurrence lorsque M1 ou M2 sont égaux à 7 ou 8, et produit un signal indéterminé lorsque le signal de détection du dispositif de détection est compris dans un troisième intervalle de détection, en l'occurrence lorsque M1 ou M2 sont égaux à 4, 6 ou 9.

On note que le troisième intervalle comporte un intervalle indéterminé fort dans lequel le signal de détection est trop fort, cet intervalle étant constitué de la valeur M1 (ou M2)=4. On note de plus que le troisième intervalle comporte un intervalle indéterminé faible, dans lequel le signal de détection est trop faible, cet intervalle étant constitué de la valeur M1 (ou M2) est égale à 9. On note enfin que le troisième intervalle de détection comporte un intervalle indéterminé intermédiaire situé entre le premier intervalle de détection et le deuxième intervalle de détection, cet intervalle étant constitué de la valeur M1 (ou M2) est égale à 6.

Lorsque M1 ou M2 sont égaux à 4, 6 ou 9, le procédé d'auto-calibration effectue une étape d'auto-calibration telle que décrite plus tôt. Cette étape d'auto-calibration consiste donc à modifier la largeur du premier intervalle de détection et/ou du deuxième intervalle de détection de ce dispositif de détection en fonction du dernier signal déterminé M1v, M2v pour ce dispositif de détection, du signal de détection M1, M2 de l'autre dispositif de détection et du dernier signal déterminé M1v, M2v pour l'autre dispositif de détection. La modification de la largeur d'un intervalle de détection consiste à modifier l'amplitude prédéterminée de l'impulsion de tension Vref1, Vref2.

On note par ailleurs que les cases hachurées du tableau de la figure 9 correspondent à des cas « impossibles », c'est-à-dire à des cas dans lesquels les conditions pour lancer l'étape 210 du procédé d'auto-calibration ne sont pas réunies.

Le procédé d'auto-calibration de l'invention peut être mis en oeuvre dans un dispositif de comptage différent.

On décrit ainsi une seconde application du procédé d'auto-calibration mis en oeuvre dans un deuxième dispositif de comptage. Dans le deuxième dispositif de comptage, la cible est un aimant excentré positionné sur la roue, le premier dispositif de détection comporte un premier capteur à effet Hall et le deuxième dispositif de détection comporte un deuxième capteur à effet Hall. Le signal de détection de chaque dispositif de détection est une tension de sortie proportionnelle au champ magnétique détecté par le capteur à effet Hall correspondant. Pour chaque dispositif de détection, le premier intervalle de détection comprend des tensions mesurées fortes et le deuxième intervalle de détection comprend des tensions mesurées faibles. Chaque intervalle de détection est défini par un seuil de tension minimal et par un seuil de tension maximal égaux chacun à un pourcentage d'une tension de référence. La modification de la largeur d'un intervalle de détection consiste à modifier le seuil de tension minimal et le seuil de tension maximal définissant cet intervalle.

Pour bien comprendre la manière dont le procédé d'auto-calibration de l'invention s'applique à ce deuxième dispositif de comptage, on conserve l'utilisation des valeurs ou qualités 4, 5, 6, 7, 8, 9 telle que précédemment décrites, et on définit que, pour le premier dispositif de détection :

- la qualité 4 correspond à une tension mesurée Vmes1 par le premier capteur à effet Hall telle que 150% Vref1 $\leq$ Vmes1 < 250% Vref1 ;
- la qualité 5 correspond à une tension mesurée Vmes1 par le premier capteur à effet Hall telle que Vref1 $\leq$ Vmes1 < 150% Vref1 ;
- la qualité 6 correspond à une tension mesurée Vmes1 par le premier capteur à effet Hall telle que 80% Vref1 $\leq$ Vmes1 < 100% Vref1 ;
- la qualité 7 correspond à une tension mesurée Vmes1 par le premier capteur à effet Hall telle que 60% Vref1 $\leq$ Vmes1 < 80% Vref1 ;
- la qualité 8 correspond à une tension mesurée Vmes1 par le premier capteur à effet Hall telle que 40% Vref1 $\leq$ Vmes1 < 60% Vref1 ;
- la qualité 9 correspond à une tension mesurée Vmes1 par le premier capteur à effet Hall telle que 20% Vref1 $\leq$ Vmes1 < 40% Vref1.

De même, pour le deuxième dispositif de détection, on définit que, pour le deuxième dispositif de détection :

- la qualité 4 correspond à une tension mesurée Vmes2 par le deuxième capteur à effet Hall telle que 150% Vref2 $\leq$ Vmes2 < 250% Vref2 ;
- la qualité 5 correspond à une tension mesurée Vmes2 par le deuxième capteur à effet Hall telle que Vref2 $\leq$ Vmes2 < 150% Vref2 ;
- la qualité 6 correspond à une tension mesurée Vmes2 par le deuxième capteur à effet Hall telle que 80% Vref2 $\leq$ Vmes2 < 100% Vref2 ;
- la qualité 7 correspond à une tension mesurée Vmes2 par le deuxième capteur à effet Hall telle que 60% Vref2 $\leq$ Vmes2 < 80% Vref2 ;
- la qualité 8 correspond à une tension mesurée Vmes2 par le deuxième capteur à effet Hall telle que 40% Vref2 $\leq$ Vmes2 < 60% Vref2 ;
- la qualité 9 correspond à une tension mesurée Vmes2 par le deuxième capteur à effet Hall telle que 20% Vref2 $\leq$ Vmes2 < 40% Vref2.

Toute situation dans laquelle Vmes1 ou Vmes2 n'est pas dans l'un des intervalles ci-dessus correspond à une situation de fraude.

On note que, dans cette application, le troisième intervalle comporte un intervalle indéterminé fort dans lequel le signal de détection est trop fort, cet intervalle étant ici constitué des mesures telles que 150% Vref1 $\leq$ Vmes1 < 250% Vref1 et telles que 150% Vref2 $\leq$ Vmes2 < 250% Vref2. On note de plus que le troisième intervalle comporte un intervalle indéterminé faible, dans lequel le signal de détection est trop faible, cet intervalle étant ici constitué des mesures telles que 20% Vref1 $\leq$ Vmes1 < 40% Vref1 et telles que 20% Vref2 $\leq$ Vmes2 < 40% Vref2.

On note enfin que le troisième intervalle de détection comporte un intervalle indéterminé intermédiaire situé entre le premier intervalle de détection et le deuxième intervalle de détection, cet intervalle étant ici constitué des mesures telles que 80% Vref1 $\leq$ Vmes1 < 100% Vref1 et 80% Vref2 $\leq$ Vmes2 < 100% Vref2.

Le graphique de la figure 8 est très proche du graphique de la figure 7 : les étapes 201' à 225' sont identiques aux étapes 201 à 225 à l'exception des étapes 202', 204', 205' et 207'. L'étape 202' ne comporte plus l'initialisation des variables E1 et E2 qui n'ont plus de raison d'être. Les étapes 204' et 205' sont des étapes au cours desquelles les capteurs magnétiques mesurent et acquièrent le champ magnétique qui est bien sûr plus important lorsque les dispositifs de détection détectent la présence de l'aimant. Dans l'étape 207', les conditions relatives à E1 et E2 sont supprimées. On note qu'il n'y a pas d'étape 206'.

Le procédé d'auto-calibration de l'invention décrit plus tôt et illustré par le tableau de la figure 9 est mis en oeuvre tel quel à l'étape 210'. Bien entendu, l'invention n'est pas limitée aux modes de réalisation décrits mais englobe toute variante entrant dans le champ de l'invention telle que définie par les revendications.

En particulier, l'invention est applicable à tout compteur mécanique.

Le dispositif de comptage peut ne comporter qu'une bobine. Il peut également comporter plus de deux bobines.

Le dispositif de comptage peut être dépourvu de dispositif de détection de fraude.

Le premier capteur à effet Hall et le deuxième capteur à effet Hall peuvent être remplacés par des capteurs magnétiques différents (par exemple de type magnétorésistif).

## Revendications

1. Procédé d'auto-calibration d'un dispositif de comptage (5) de tours d'une roue (6) au moyen d'un premier dispositif de détection et d'un deuxième dispositif de détection fournissant successivement un signal de détection d'une cible fixée à la roue, une unité de comptage étant reliée aux dispositifs de détection et étant adaptée, pour chacun des dispositifs de détection, à produire un signal de présence lorsque le signal de détection est compris dans un premier intervalle de signal fort, à produire un signal d'absence lorsque le signal de détection est compris dans un deuxième intervalle de signal faible, à produire un signal indéterminé lorsque le signal de détection du dispositif de détection est compris dans un troisième intervalle,

le procédé comportant, pour chaque dispositif de détection, une étape d'auto-calibration au cours de laquelle, lorsque l'unité de comptage produit un signal indéterminé, on modifie la largeur du premier intervalle et/ou du deuxième intervalle de ce dispositif de détection en fonction du dernier signal déterminé pour ce dispositif de détection, du signal de détection de l'autre dispositif de détection et du dernier signal déterminé pour l'autre dispositif de détection.

2. Procédé d'auto-calibration selon la revendication 1, dans lequel la roue (6) est en matériau non métallique, la cible est une masse métallique, le premier dispositif de détection et le deuxième dispositif de détection sont deux circuits inductifs (10.1, 10.2) ayant chacun une bobine (1,2) montée fixe par rapport au bâti en regard chacune d'une portion de trajectoire de la masse métallique, l'unité de comptage étant adaptée à émettre périodiquement dans chaque circuit inductif une impulsion de tension d'amplitude prédéterminée, le signal de détection de chaque dispositif de détection étant un signal oscillant de tension en sortie du circuit inductif, l'unité de comptage étant de plus adaptée à détecter le signal de détection, à le comparer à une tension de référence, le premier intervalle étant constitué d'au moins un total d'oscillations faible et le deuxième intervalle étant constitué d'au moins un total d'oscillations fort, la modification de la largeur d'un intervalle de détection consistant à modifier l'amplitude prédéterminée.

3. Procédé d'auto-calibration selon la revendication 1, dans lequel la roue est en matériau non métallique, la cible est un aimant, le premier dispositif de détection et le deuxième dispositif de détection sont deux circuits comprenant chacun un capteur magnétique de type capteur à effet Hall montés fixes par rapport au bâti en regard chacune d'une portion de trajectoire de l'aimant, le signal de détection de chaque dispositif de détection étant une tension de sortie proportionnelle au champ magnétique détecté par le capteur, l'unité de comptage étant adaptée à comparer la tension de sortie avec des seuils de tension définissant les intervalles, le premier intervalle comprenant des tensions mesurées fortes et le deuxième intervalle comprenant des tensions mesurées faibles, la modification de la largeur d'un intervalle de détection consistant à modifier les seuils de tension définissant cet intervalle.

4. Procédé d'auto-calibration selon l'une des revendications précédentes, dans lequel le troisième intervalle comporte :

    - un intervalle indéterminé fort dans lequel le signal de détection est trop fort ;
    - un intervalle indéterminé faible dans lequel le signal de détection est trop faible ;
    - un intervalle indéterminé intermédiaire situé entre le premier intervalle et le deuxième intervalle.

5. Dispositif de comptage (5) de tours d'une roue (6) comprenant un premier dispositif de détection et un deuxième dispositif de détection fournissant successivement un signal de détection d'une cible fixée à la roue, le dispositif de comptage comprenant de plus une unité de comptage reliée aux dispositifs de détection et agencée, pour chacun des dispositifs de détection, à produire un signal de présence lorsque le signal de détection est compris dans un premier intervalle de signal fort, à produire un signal d'absence lorsque le signal de détection est compris dans un deuxième intervalle de signal faible, à produire un signal indéterminé lorsque le signal de détection du dispositif de détection est compris dans un troisième intervalle, le dispositif de comptage étant agencé pour mettre en oeuvre le procédé d'auto-calibration selon la revendication 1.

6. Compteur comprenant un dispositif de comptage selon la revendication 5.


**Patentansprüche**

1. Verfahren zur Selbstkalibrierung einer Zählvorrichtung (5) zum Zählen der Umdrehungen eines Rades (6) mittels einer ersten Erfassungsvorrichtung und einer zweiten Erfassungsvorrichtung, die nacheinander ein Erfassungssignal der Erfassung eines am Rad fixierten Ziels liefern, wobei eine Zähleinheit mit den Erfassungsvorrichtungen verbunden und dazu geeignet ist, für jede der Erfassungsvorrichtungen ein Anwesenheitssignal zu erzeugen, wenn das Erfassungssignal in einem ersten Intervall mit einem starken Signal enthalten ist, ein Abwesenheitssignal zu erzeugen, wenn das Erfassungssignal in einem zweiten Intervall mit einem schwachen Signal enthalten ist, ein unbestimmtes Signal zu erzeugen, wenn das Erfassungssignal der Erfassungsvorrichtung in einem dritten Intervall enthalten ist,
wobei das Verfahren für jede Erfassungsvorrichtung einen Selbstkalibrierungsschritt umfasst, während dessen, wenn die Zähleinheit ein unbestimmtes Signal erzeugt, man die Breite des ersten Intervalls und/oder des zweiten Intervalls dieser Erfassungsvorrichtung in Abhängigkeit des letzten für diese Erfassungsvorrichtung bestimmten Signals, des Erfassungssignals der anderen Erfassungsvorrichtung und des letzten für die andere Erfassungsvorrichtung bestimmten Signals modifiziert.

2. Selbstkalibrierungsverfahren nach Anspruch 1, bei dem das Rad (6) aus einem nicht metallischen Material ist, das Ziel aus einer metallischen Masse ist, die erste Erfassungsvorrichtung und die zweite Erfassungsvorrichtung zwei induktive Schaltungen (10.1, 10.2) sind, die jeweils eine Spule (1, 2) haben, die in Bezug auf das Gestell gegenüber jeweils einem Bahnabschnitt der metallischen Masse ortsfest angebracht ist, wobei die Zähleinheit dazu geeignet ist, in jeder induktiven Schaltung periodisch einen Spannungsimpuls mit vorbestimmter Amplitude auszusenden, wobei das Erfassungssignal jeder Erfassungsvorrichtung ein oszillierendes Spannungssignal am Ausgang der induktiven Schaltung ist, wobei die Zähleinheit ferner dazu geeignet ist, das Erfassungssignal zu erfassen, es mit einer Referenzspannung zu vergleichen, wobei das erste Intervall aus mindestens einer geringen Gesamtzahl von Schwingungen gebildet ist und das zweite Intervall aus mindestens einer hohen Gesamtzahl von Schwingungen gebildet ist, wobei die Modifizierung der Breite eines Erfassungsintervalls im Modifizieren der vorbestimmten Amplitude besteht.

3. Selbstkalibrierungsverfahren nach Anspruch 1, bei dem das Rad aus einem nicht metallischen Material ist, das Ziel ein Magnet ist, die erste Erfassungsvorrichtung und die zweite Erfassungsvorrichtung zwei Schaltungen sind, die jeweils einen Magnetsensor vom Typ Halleffekt-Sensor umfassen, die in Bezug auf das Gestell gegenüber jeweils einem Bahnabschnitt des Magneten ortsfest angebracht sind, wobei das Erfassungssignal jeder Erfassungsvorrichtung eine Ausgangsspannung hat, die proportional zum Magnetfeld ist, das von dem Sensor erfasst wird, wobei die Zähleinheit dazu geeignet ist, die Ausgangsspannung mit Spannungsschwellwerten zu vergleichen, die die Intervalle definieren, wobei das erste Intervall hohe gemessene Spannungen und das zweite Intervall niedrige gemessene Spannungen umfasst, wobei die Modifizierung der Breite eines Erfassungsintervalls im Modifizieren der Spannungsschwellwerte besteht, die dieses Intervall definieren.

4. Selbstkalibrierungsverfahren nach einem der vorhergehenden Ansprüche, bei dem das dritte Intervall umfasst:

   - ein starkes unbestimmtes Intervall, in dem das Erfassungssignal sehr stark ist;
   - ein schwaches unbestimmtes Intervall, in dem das Erfassungssignal sehr schwach ist;
   - ein mittleres unbestimmtes Intervall, das sich zwischen dem ersten Intervall und dem zweiten Intervall befindet.

5. Zählvorrichtung (5) zum Zählen der Umdrehungen eines Rades (6), die eine erste Erfassungsvorrichtung und eine zweite Erfassungsvorrichtung umfasst, die nacheinander ein Erfassungssignal der Erfassung eines Ziels liefern, das an dem Rad fixiert ist, wobei die Zählvorrichtung ferner eine Zähleinheit umfasst, die mit den Erfassungsvorrichtungen verbunden und so ausgebildet ist, dass sie für jede der Erfassungsvorrichtungen ein Anwesenheitssignal erzeugt, wenn das Erfassungssignal in einem ersten Intervall mit starkem Signal enthalten ist, ein Abwesenheitssignal erzeugt, wenn das Erfassungssignal in einem zweiten Intervall mit schwachem Signal enthalten ist, ein unbestimmtes Signal erzeugt, wenn das Erfassungssignal der Erfassungsvorrichtung in einem dritten Intervall enthalten ist, wobei die Zählvorrichtung so ausgebildet ist, dass sie das Selbstkalibrierungsverfahren nach Anspruch 1 durchführt.

6. Zähler, umfassend eine Zählvorrichtung nach Anspruch 5.

**Claims**

1. A self-calibration method for self-calibrating a device (5) for counting revolutions of a wheel (6) by means of a first detector device and a second detector device successively supplying a signal concerning detection of a target secured to the wheel, a counter unit being connected to the detector devices and being arranged, for each of the detector devices, to produce a presence signal when the detection signal lies within a first signal range of strong signals, to produce an absence signal when the detection signal lies in a second signal range of weak signals, and to produce an indeterminate signal when the detection by the detector device lies in a third range;

   the method including, for each detector device, a self-calibration step during which, when the counter unit produces an indeterminate signal, the width of the first range and/or of the second range of the detector device is modified as a function of the most recent signal determined for the detector device, of the detection signal of the other detector device, and of the most recent signal determined for the other detector device.

2. A self-calibration method according to claim 1, wherein the wheel (6) is made of non-metallic material, the target is a mass of metal, the first detector device and the second detector device are two inductive circuits (10.1, 10.2) each having a coil (1, 2) mounted stationary relative to the structure, each facing a portion of the path followed by the metal mass, the counter unit being adapted to emit a voltage pulse of predetermined amplitude periodically into each inductive circuit, the detection signal of each detector device being an oscillating voltage signal at the output from the inductive circuit, the counter unit also being adapted to detect the detection signal, to compare it with a reference voltage, the first range being constituted by at least one total of weak oscillations and the second range being constituted by at least one total of strong oscillations, the modification of the width of a detection range consisting in modifying the predetermined amplitude.

3. A self-calibration method according to claim 1, wherein the wheel is made of non-metallic material, the target is a magnet, the first detector device and the second detector device are two circuits, each comprising a magnetic sensor of the Hall effect sensor type mounted stationary relative to the structure, each facing a portion of the path followed by the magnet, the detection signal of each detector device being an output voltage proportional to the magnetic field detected by the sensor, the counter unit being adapted to compare the output voltage with voltage thresholds defining the ranges, the first range comprising strong measured voltages and the second range comprising weak measured voltages, the modification of the width of a detection range consisting in modifying the voltage thresholds defining the range.

4. A self-calibration method according any preceding claim, wherein the third range comprises:

- a strong indeterminate range in which the detection signal is too strong;
- a weak indeterminate range in which the detection signal is too weak; and
- an intermediate indeterminate range situated between the first range and the second range.

5. A device (5) for counting revolutions of a wheel (6), the device comprising a first detector device and a second detector device that successively supply a detection signal on detecting a target secured to the wheel, the counter device also comprising a counter unit connected to the detector devices and arranged, for each of the detector devices, to produce a presence signal when the detection signal lies in a first signal range of strong signals, to produce an absence signal when the detection signal lies in a second signal range of weak signals, and to produce an indeterminate signal when the detection signal of the detector device lies in a third range, the counter device being arranged to implement the self-calibration method of claim 1.

6. A meter including a counter device according to claim 5.

Fig. 1

Position 1

6    7

Bobine 1

Bobine 2

8    9

Fig. 2

Position 2

7    6

Bobine 1

Bobine 2

8    9

Fig. 3

Position 3

6

Bobine 1

Bobine 2

8    9    7

Fig. 4

Position 4

6

Bobine 1

Bobine 2

8    9    7

Fig. 5

Fig. 6

Début

201

Calibration Vref1 et Vref 2 (usine) pour avoir 5 impulsions en cas de présence du quart de cercle métallique sous la bobine et 7 ou 8 sinon*

\* : En ce qui concerne l'absence du quart de cercle métallique en dessous de la bobine, les valeurs peuvent valoir 7 ou 8 selon la position de la roue par rapport à la bobine

202

NT = 0 (Nombre de ½ tours roue 6)
CT = 0 (Nombre de tours roue de référence)
R=0 (Etat de la machine de comptage)
E1 = E2 = 0 (Moyennes enveloppes)
DI = 0 (Dernière détection correcte (nombre d'impulsions = 4 ou 5) par bobines 1 ou 2 ?)
M1v = M2v = 0 (Dernier nombre d'impulsions correct (5, 7 ou 8) respectivement pour bobines 1 et 2)
SA1=SA2=0 (=1 si état continu (B1=6 et (B2=7 ou 8)) pour SA1 / (B2=6 et (B1=7 ou 8)) pour SA2)

203

Attente\*\* 200ms (Fe=5Hz)

\*\* : Mise en veille pendant 200ms

204

t= tn : Excitation Bobine 1 (DAC=Vref1; Cmd1 passant, charge capacité bobine 1 par mise à la masse 2µs du bas bobine 1 puis reliée au + du comparateur, Cmd2 bloquant, bas bobine 2 à la masse)
t=tn+t0, Mesure Bobine 1 nombre d'impulsions = M1
t=tn+t1, Mesure niveau de tension de l'enveloppe = U1n

205

t= tn+50µs : Excitation Bobine 2 (DAC=Vref2; Cmd2 passant, charge capacité bobine 2 par mise à la masse 2µs du bas bobine 2 puis reliée au + du comparateur, Cmd1 bloquant, bas bobine 1 à la masse)
t=tn+50µs+t0, Mesure Bobine 2 nombre d'impulsions = M2
t=tn+50µs+t1, Mesure niveau de tension de l'enveloppe = U2n

Calcul de E1 (moyenne des N derniers U1n)
Calcul de E2 (moyenne des N derniers U2n)

206

207

Auto-calibration (Incrémentation de NT et calcul de CT simultanément)

210

M1+M2 ≤ 9
OU M1<4 OU M1>9
OU M2<4 OU M2>9
OU (M1=4 et M2=9) OU (M1=9 et M2=4)
OU ((4≤M1≤5) et (4≤M2≤5))
OU E1 < E_Seuil OU
E2 < E_Seuil ?

OUI

NON

209

M1=4 OU M1=6 OU M1=9
OU M2=4 OU M2=6 OU M2=9 ?

OUI

NON

220

208

Envoi Message Fraude

222

M2=5 OU M2=7 OU M2=8 ?

NON

OUI

M2v=M2
Si M1v=0 : Si M2v=5 alors M1v=7 sinon M1v=5

223

NON

M1=5 OU M1=7 OU M1=8 ?

OUI

M1v=M1
Si M2v=0 : Si M1v=5 alors M2v=7 sinon M2v=5

221

Si (M1=6 et (M2=7 ou M2=8)) alors SA1=1
Sinon SA1=0

224

Si (M2=6 et (M1=7 ou M1=8)) alors SA2=1
Sinon SA2=0

225

214

NON

(R=0 ou R=2)
et 4≤M1≤5?

211

NON

R=1 et 4≤M2≤5?

OUI

215

R=2
DI=2

OUI

212

R=1
DI=1

216

(R=0 ou R=4)
et 4≤M2≤5?

OUI

217

R=3
DI=2

NON

AUTOMATE A ETATS

R=3 et 4≤M1≤5?

NON

218

OUI

R=4
DI=1

219

213

NT=NT+1
CT=NT

Fig. 7

Fig. 8

Fig. 9

| M2=↓ | M1v=→ M2v=↓ | M1=→ 4 | 4 | 5 | 5 | 6 | 6 | 7 ou 8 | 7 ou 8 | 9 | 9 |
|---|---|---|---|---|---|---|---|---|---|---|---|
| | | 5 | 7 ou 8 | 5 | 7 ou 8 | 5 | 7 ou 8 | 5 | 7 ou 8 | 5 | 7 ou 8 |
| 4 | 5 | ▧ | ▧ | ▧ | ▧ | Correction détecteur 1 : +\|Δε1\|<br>Correction détecteur 2 : +\|Δε2\| | Correction détecteur 1 : +\|Δε1\|<br>Correction détecteur 2 : +\|Δε2\| | Correction détecteur 1 : +Aucune<br>Correction détecteur 2 : +\|Δε2\| | Correction détecteur 1 : +Aucune<br>Correction détecteur 2 : +\|Δε2\| | ▧ | ▧ |
| 4 | 7 ou 8 | ▧ | ▧ | ▧ | ▧ | Correction détecteur 1 : +\|Δε1\|<br>Correction détecteur 2 : +\|Δε2\| | Correction détecteur 1 : +\|Δε1\|<br>Correction détecteur 2 : +\|Δε2\| | Correction détecteur 1 : +Aucune<br>Correction détecteur 2 : +\|Δε2\| | Correction détecteur 1 : +Aucune<br>Correction détecteur 2 : +\|Δε2\| | ▧ | ▧ |
| 5 | 5 | ▧ | ▧ | ▧ | ▧ | Correction détecteur 1: +\|Δε1\|<br>Correction détecteur 2: Aucune<br>Si SA1=1 et DI=2 :<br>Faire NT=NT+1 et CT=NT<br>Faire DI=1 et si R=3 faire R=4<br>sinon faire R=1 | Correction détecteur 1: +\|Δε1\|<br>Correction détecteur 2: Aucune<br>Si SA1=1 et DI=2 :<br>Faire NT=NT+1 et CT=NT<br>Faire DI=1 et si R=3 faire R=4<br>sinon faire R=1 | ▧ | ▧ | Correction détecteur 1 : -\|Δε1\|<br>Correction détecteur 2 : Aucune | Correction détecteur 1 : -\|Δε1\|<br>Correction détecteur 2 : Aucune |
| 5 | 7 ou 8 | ▧ | ▧ | ▧ | ▧ | Correction détecteur 1: +\|Δε1\|<br>Correction détecteur 2: Aucune<br>Si SA1=1 et DI=2 :<br>Faire NT=NT+1 et CT=NT<br>Faire DI=1 et si R=3 faire R=4<br>sinon faire R=1 | Correction détecteur 1: +\|Δε1\|<br>Correction détecteur 2: Aucune<br>Si SA1=1 et DI=2 :<br>Faire NT=NT+1 et CT=NT<br>Faire DI=1 et si R=3 faire R=4<br>sinon faire R=1 | ▧ | ▧ | Correction détecteur 1 : -\|Δε1\|<br>Correction détecteur 2 : Aucune | Correction détecteur 1 : -\|Δε1\|<br>Correction détecteur 2 : Aucune |
| 6 | 5 | Correction détecteur 1 : +\|Δε1\|<br>Correction détecteur 2 : +\|Δε2\| | Correction détecteur 1 : +\|Δε1\|<br>Correction détecteur 2 : +\|Δε2\| | Correction détecteur 1 : Aucune<br>Correction détecteur 2 : +\|Δε2\|<br>Si SA2=1 et DI=1 :<br>Faire NT=NT+1 et CT=NT<br>Faire DI=2 et si R=1 faire R=2<br>sinon faire R=3 | Correction détecteur 1 : Aucune<br>Correction détecteur 2 : +\|Δε2\|<br>Si SA2=1 et DI=1 :<br>Faire NT=NT+1 et CT=NT<br>Faire DI=2 et si R=1 faire R=2<br>sinon faire R=3 | ▧ | Correction détecteur 1: +\|Δε1\|<br>Correction détecteur 2: Aucune | | | Correction détecteur 1 : -\|Δε1\|<br>Correction détecteur 2 : Aucune | Correction détecteur 1 : -\|Δε1\|<br>Correction détecteur 2 : Aucune |
| 6 | 7 ou 8 | Correction détecteur 1 : +\|Δε1\|<br>Correction détecteur 2 : +\|Δε2\| | Correction détecteur 1 : +\|Δε1\|<br>Correction détecteur 2 : +\|Δε2\| | Correction détecteur 1 : Aucune<br>Correction détecteur 2 : +\|Δε2\|<br>Si SA2=1 et DI=1 :<br>Faire NT=NT+1 et CT=NT<br>Faire DI=2 et si R=1 faire R=2<br>sinon faire R=3 | Correction détecteur 1 : Aucune<br>Correction détecteur 2 : +\|Δε2\|<br>Si SA2=1 et DI=1 :<br>Faire NT=NT+1 et CT=NT<br>Faire DI=2 et si R=1 faire R=2<br>sinon faire R=3 | Correction détecteur 1 : Aucune<br>Correction détecteur 2 : +\|Δε2\| | Correction détecteur 1 : +\|Δε1\|<br>Correction détecteur 2 : +\|Δε2\| | | | Correction détecteur 1 : -\|Δε1\|<br>Correction détecteur 2 : Aucune | Correction détecteur 1 : -\|Δε1\|<br>Correction détecteur 2 : Aucune |
| 7 ou 8 | 5 | Correction détecteur 1: +\|Δε1\|<br>Correction détecteur 2: Aucune | Correction détecteur 1: +\|Δε1\|<br>Correction détecteur 2: Aucune | ▧ | ▧ | | | ▧ | ▧ | Correction détecteur 1 : -\|Δε1\|<br>Correction détecteur 2 : Aucune | Correction détecteur 1 : -\|Δε1\|<br>Correction détecteur 2 : Aucune |
| 7 ou 8 | 7 ou 8 | Correction détecteur 1: +\|Δε1\|<br>Correction détecteur 2: Aucune | Correction détecteur 1: +\|Δε1\|<br>Correction détecteur 2: Aucune | ▧ | ▧ | | | ▧ | ▧ | Correction détecteur 1 : -\|Δε1\|<br>Correction détecteur 2 : Aucune | Correction détecteur 1 : -\|Δε1\|<br>Correction détecteur 2 : Aucune |
| 9 | 5 | ▧ | ▧ | Correction détecteur 1 : Aucune<br>Correction détecteur 2 : -\|Δε2\| | Correction détecteur 1 : Aucune<br>Correction détecteur 2 : -\|Δε2\| | ▧ | ▧ | Correction détecteur 1 : Aucune<br>Correction détecteur 2 : -\|Δε2\| | Correction détecteur 1 : Aucune<br>Correction détecteur 2 : -\|Δε2\| | Correction détecteur 1 : -\|Δε1\|<br>Correction détecteur 2 : -\|Δε2\| | Correction détecteur 1 : -\|Δε1\|<br>Correction détecteur 2 : -\|Δε2\| |
| 9 | 7 ou 8 | ▧ | ▧ | Correction détecteur 1 : Aucune<br>Correction détecteur 2 : -\|Δε2\| | Correction détecteur 1 : Aucune<br>Correction détecteur 2 : -\|Δε2\| | Correction détecteur 1 : Aucune<br>Correction détecteur 2 : -\|Δε2\| | Correction détecteur 1 : Aucune<br>Correction détecteur 2 : -\|Δε2\| | Correction détecteur 1 : Aucune<br>Correction détecteur 2 : -\|Δε2\| | Correction détecteur 1 : Aucune<br>Correction détecteur 2 : -\|Δε2\| | Correction détecteur 1 : -\|Δε1\|<br>Correction détecteur 2 : -\|Δε2\| | Correction détecteur 1 : -\|Δε1\|<br>Correction détecteur 2 : -\|Δε2\| |

Fig. 9

Fig. 10